# EUROPEAN PATENT APPLICATION

(11) **EP 1 241 396 A1**
(43) Date of publication of application: **18.09.2002**
(21) Application number: 02075642.5
(22) Date of filing: 18.02.2002
(51) Int. Cl.: F16M 11/12, H04R 1/02

(54) **Supporting construction**

(30) Priority: 14.03.2001 NL 1017602
(71) Applicant: Vogel's Holding B.V., 5628 DB Eindhoven (NL)
(72) Inventor: Obdeijn, Rudolf Franciscus Andreas, 5658 BA Eindhoven (NL)
(74) Representative: Dohmen, Johannes Maria Gerardus

(57) **Abstract**

The invention relates to a supporting construction for supporting an object, which supporting construction comprises two elements (58) which are adjustable about an axis of rotation with respect to each other and which can be clamped together in a desired position. The two elements are provided with projecting ridges (69) of conical section and with grooves (7,10) in which said ridges are received, which ridges and which grooves extend concentrically about the axis of rotation and perpendicularly to an imaginary plane through said axis of rotation.

## Description

The invention relates to a supporting construction for supporting an object, which supporting construction comprises two elements which are adjustable about an axis of rotation with respect to each other and which can be clamped together in a desired position.

From US patent No. 5,73 0,409 a supporting construction for a loudspeaker is known in which two elements which are adjustable about an axis of rotation with respect to each other and which can be clamped together in a desired position are provided with grooves and teeth extending in radial direction relative to said axis of rotation. When the two elements are to be adjusted relative to each other, said two elements must be detached from each other in such a manner that the teeth are disengaged from the grooves so as to enable rotation of the two elements. The construction only allows an adjustment in steps.

According to the invention, the two elements are provided with projecting ridges of conical section and with grooves in which said ridges are received,, which ridges and which grooves extend concentrically about the axis of rotation and perpendicularly to an imaginary plane through said axis of rotation.

When using the construction according to the invention, the fin-shaped ridges can remain in engagement with the grooves upon adjustment of the two elements with respect to each other, so that a proper interconnection between the two elements is also maintained during the adjustment. Furthermore, a stepless adjustment of the two elements with respect to each other can be achieved.

It is noted that from FR- 2,749,618 a device comprising two elements provided with enmeshing teeth is known, which elements are adjustable with respect to each other. Since the teeth are relatively small, however, additional measures, such as the provision of the flanges are arranged on either side of the teeth, are required in order to ensure that the two elements remain interconnected during the adjustment. In addition, the device according to the invention is capable of realising a significantly better clamped connection between the two elements than the relatively small teeth.

One embodiment of the device according to the invention is characterised in that the supporting construction comprises two pairs of two elements which are adjustable about an axis of rotation with respect to each other and which can be clamped together in a desired position.

Preferably, the shell-shaped elements of the two pairs are arranged in such a manner that the imaginary axes of rotation about which the elements accommodated within said shells are rotatable with respect to the shells are disposed on the sides of the shells that face away from each other.

In this way it is possible to design each shell with a relatively small radius, as a result of which rotation through a relatively large angle of the object mounted on the supporting construction is possible while using a relatively compact construction. The interlocking ridges and grooves ensure a firm connection between the two elements.

The invention will be explained in more detail hereinafter by means of a possible embodiment of the supporting construction according to the invention as shown in the accompanying figures.

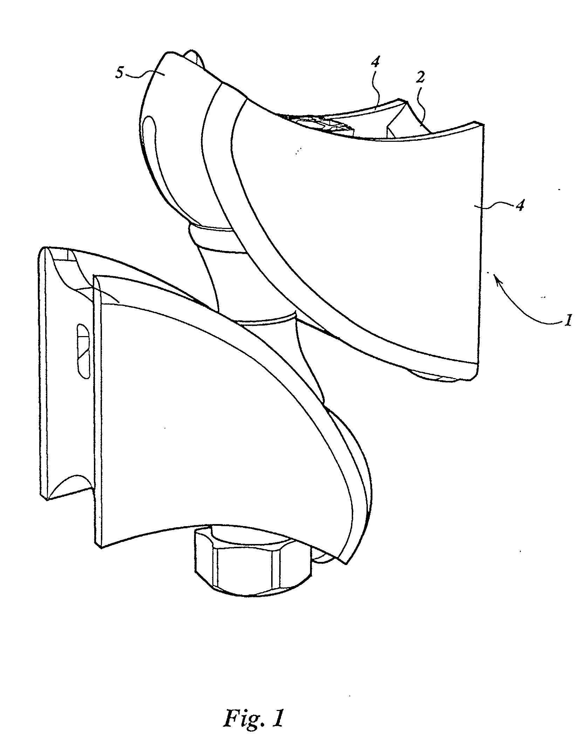

Figure 1 is a perspective view of a supporting construction according to the invention.

Figure 2 is a sectional view of the supporting construction as shown in Figure 1.

Figure 3 is a sectional view of Figure 2, seen along the line III-III in Figure 2.

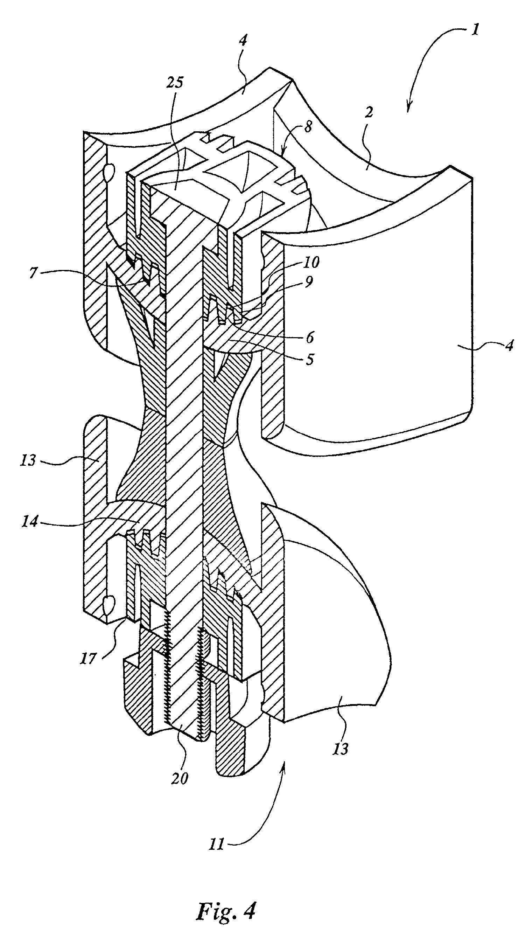

Figure 4 is a larger-scale, perspective view of the supporting construction along the line III-III in Figure 2.

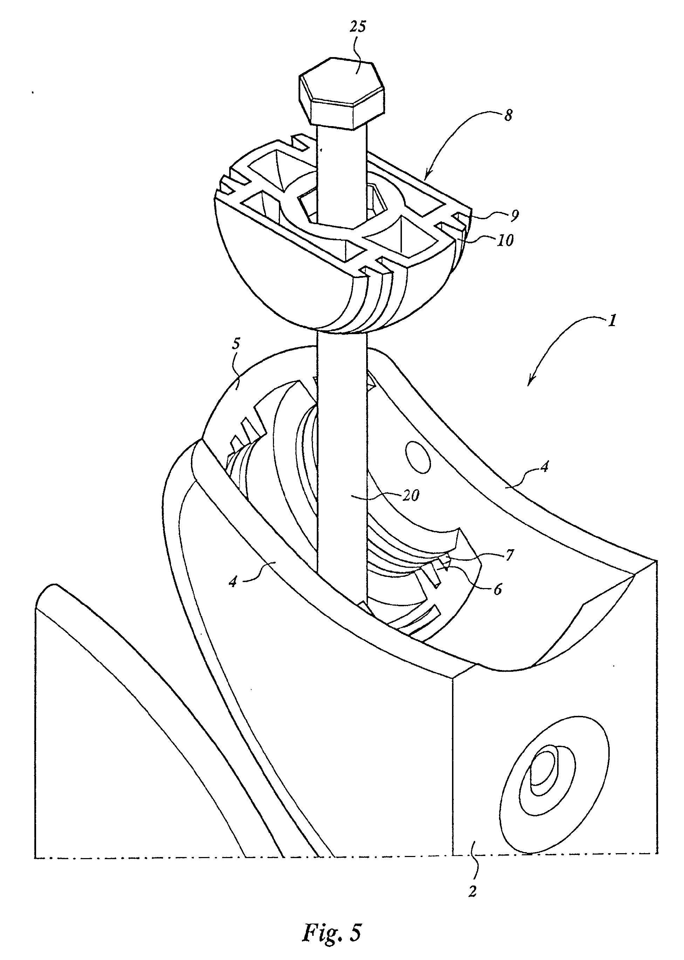

Figure 5 is a larger-scale, perspective view, which shows a few parts of the supporting construction in spaced-apart relationship.

The supporting construction as shown in the figures comprises a first element 1, which is provided with a plate-shaped element 2 to be mounted on a wall, for example, which element 2 is provided with one or more openings 3 for passing fastening bolts or the like therethrough. Cheeks 4 extending parallel to each other join the sides of said plate-shaped element 2, between which cheeks a shell-shaped element 5 is positioned. Said shell-shaped element is provided with a number of fin-shaped ridges 6 extending parallel to each other, which ridges bound grooves 7 located therebetween. Positioned within the shell 5 of the first element 1 is a second element 8, which is approximately semi-cylindrical in shape, seen in sectional view. Said second element 8 is provided with projecting ridges on the outer circumference thereof, which ridges bound grooves 10 located therebetween.

As will be apparent from the figures, the ridges 6 and 9 and as well as the grooves 7 and 10 are conical in section, all this in such a manner that the ridges 9 of the second element 8 fit in the grooves 7 of the first element 1 and the ridges 6 of the first element 1 fit in the grooves 10 of the second element 8. Furthermore it will be apparent that if the second element 8 is positioned within the shell 5 of the first element 1, the two elements 1 and 8 can be rotated with respect to each other about an imaginary axis of rotation extending perpendicularly to the longitudinal direction of the ridges and the grooves, wherein the ridges extending concentrically around said axis of rotation may be positioned in said grooves during said rotation.

In the embodiment that is shown in the figures, the supporting construction comprises a further element 11, which is provided with a plate-shaped element 12, on which a loudspeaker, for example, or a similar object can be mounted. Cheeks 13 extending parallel to each other join the side edges of said plate-shaped element 12. A shell-shaped element 14 is arranged between the ends of the cheeks 13 remote from the plate-shaped element 12. The shell 14 is provided with projecting ridges 15 in a similar manner as the shell 5, which ridges bound grooves 16 located therebetween. It will be apparent that the configuration of the element 11 largely corresponds to that of the element 1. The axes of rotation of the shells 5, 14 are located on sides of the shells facing away from each other. As a result, the distance. or radius, between the shell and the axis of rotation can be relatively small.

Located within the shell 14 is an element 17 corresponding to the element 8, which is provided with projecting ridges 18 on the outer circumference thereof and with grooves 19 located between said ridges. Also the ridges 15 and 18 and the grooves 16 and 19 are conical in section, with the projecting ridges 15 and 18 fitting in the grooves 19 and 16, respectively.

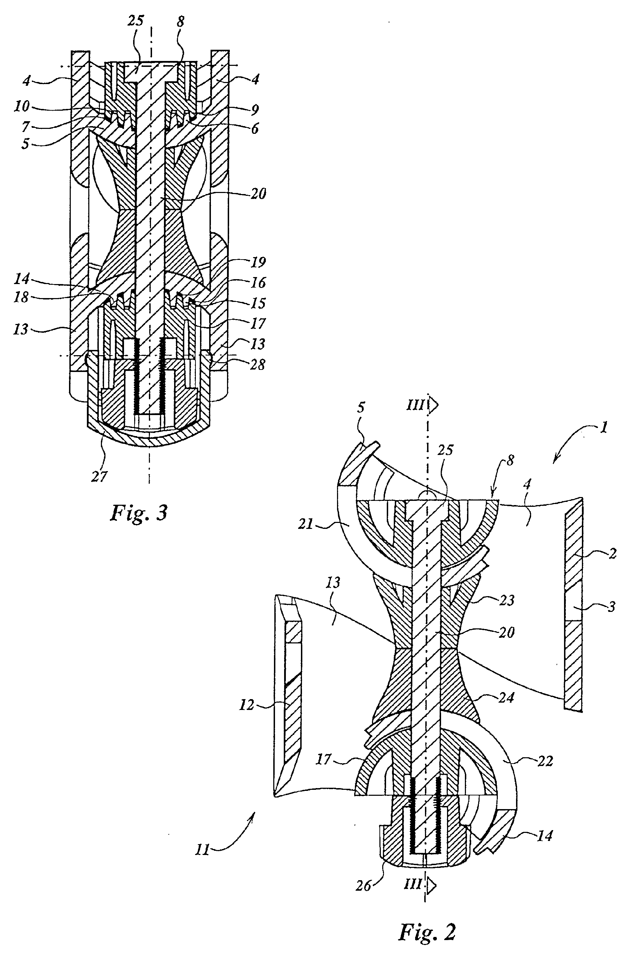

The various parts of the supporting construction are held together by a bolt 20 which, as is apparent in particular from Figure 2, extends through bores formed in the elements 8 and 17 for that purpose and through slotted holes 21 and 22, respectively, formed in the shells 5 and 14, which slotted holes extend parallel to the grooves 10 and 16, respectively, in the respective shells.

The two shells 14 and 5 are maintained a desired distance apart by means of two distance pieces 23 and 24 positioned between the shells and surrounding the bolt 20.

The head 25 of the bolt is countersunk in the element 8, whilst a nut 26 is screwed on the end of the bolt extending below the element 17.

The outer circumference of the shell 5 extends concentrically around the imaginary axis of rotation about which the elements 1 and 8 can be rotated with respect to each other, whilst the outer circumference of the shell 14 extends concentrically around the imaginary axis of rotation about which the two elements 11 and 17 can be rotated with respect to each other.

The end of the distance pieces 23 that faces towards the shell 5 is configured to correspond to the outer circumference of the shell, whilst the end of the distance pieces 24 facing towards the shell 14 has a curved configuration corresponding to the outer circumference of the shell 14.

If the bolt of the supporting construction as described above is slightly slackened, the elements 1 and 11 can be independently rotated through a desired angle relative to the other elements about the aforesaid imaginary axes of rotation extending perpendicularly to the plane of drawing of Figure 2. The magnitude of the angle through which the elements 1 and 11 can be rotated is determined by the length of the slotted holes 21 and 22, respectively. Furthermore, the elements 1 and 11 can be rotated about the bolt 20.

Once the desired position of the elements 1 and 11 has been reached, the elements of the supporting construction can be clamped together by tightening the nut 26, as a result of the various ridges as mentioned above being forced deeper down into the associated grooves.

As is furthermore shown in Figure 3, the nut 26 can be covered by means of a cap 27, which fits between the cheeks 13 and which is provided with projecting cams 28 on its outer circumference, which can be snapped into corresponding recesses in the cheeks.

It stands to reason that modifications and or additions to the construction as described above are possible. Thus, the plate-shaped element 12 for supporting an object may have a different configuration. The element 11 may, for example, include a platform on which an object to be supported can be placed.

## Claims

1. A supporting construction for supporting an object, which supporting construction comprises two elements (5, 8) which are adjustable about an axis of rotation with respect to each other and which can be clamped together in a desired position, **characterized in that** the two elements (5) are provided with projecting ridges (6, 9) of conical section and with grooves (6, 9) in which said ridges are received, which ridges and which grooves extend concentrically about the axis of rotation and perpendicularly to an imaginary plane through said axis of rotation.

2. A supporting construction according to claim 1, **characterised in that** one element comprises the shell, which is provided with said ridges and said grooves on the inner side thereof, and that the second element is located within said shell.

3. A supporting construction according to claim 1 or 2, **characterized in that** the supporting construction comprises two pairs of two elements which are adjustable about an axis of rotation with respect to each other and which can be clamped together in a desired position.

4. A supporting construction according to claim 3 or 4, **characterized in that** the imaginary axes of rotation about which the elements accommodated within said shells are rotatable with respect to the shells are disposed on the sides of the shells that face away from each other.

5. A supporting construction according to claim 3 or 4, **characterised in that** the two pairs of elements which are rotatable with respect to each other are interconnected by means of a single pin extending through the various elements.

6. A supporting construction according to claim 5, **characterized in that** slotted holes for the passage of said pin are formed in said shells.

7. A supporting construction according to any one of the preceding claims 3-6, **characterised in that** one pair of elements being pivotable relative to each other is rotatable about the bolt with respect to the other pair of elements being pivotable relative to each other.

8. A supporting construction according to any one of the preceding claims, **characterised in that** a supporting element is connected to a shell, by means of which supporting element the supporting construction can be mounted on a wall or the like.

9. A supporting construction according to any one of the preceding claims, **characterised in that** a supporting element is connected to a shell, by means of which supporting element an object can be carried.

10. A supporting construction according to claim 8 or 9, **characterised in that** the supporting element is connected to the shell by means of two cheeks between which the shell is positioned.
